# EUROPÄISCHE PATENTSCHRIFT

(11) **EP 2 293 924 B1**
(45) Veröffentlichungstag und Bekanntmachung des Hinweises auf die Patenterteilung: **07.03.2012**
(21) Anmeldenummer: 09765839.7
(22) Anmeldetag: 16.06.2009
(51) Int. Cl.: B29C 70/54, B29C 35/08, H05B 6/80, B29C 33/06

(54) **VERFAHREN UND FORMWERKZEUG ZUR HERSTELLUNG VON BAUTEILEN AUS FASERVERSTÄRKTEM VERBUNDWERKSTOFF MIT MIKROWELLEN**
METHOD AND MOLD FOR THE PRODUCTION OF PARTS FROM FIBER-REINFORCED COMPOSITE MATERIAL BY MEANS OF MICROWAVES
PROCÉDÉ ET OUTIL DE FORMAGE PERMETTANT LA FABRICATION DE PIÈCES EN MATÉRIAU COMPOSITE RENFORCÉ PAR DES FIBRES À L'AIDE DE MICRO-ONDES

(30) Priorität: 18.06.2008 DE 102008029058
(43) Veröffentlichungstag der Anmeldung: 16.03.2011
(73) Patentinhaber: GKN Aerospace Services Limited, Isle of Wight, PO32 6RA (GB)
(72) Erfinder: HERKNER, Thomas Mathias, 81241 München (DE)
(74) Vertreter: Rössler, Matthias
(86) Internationale Anmeldenummer: PCT/EP2009/057470
(87) Internationale Veröffentlichungsnummer: WO 2009/153259

(56) Entgegenhaltungen:
- WO-A1-99/59802
- WO-A1-2008/007043
- DE-A1- 10 360 743
- JP-A- 2 006 107

## Beschreibung

Die vorliegende Erfindung betrifft ein Verfahren zur Herstellung eines Bauteils aufweisend zumindest eine Schicht mit faserverstärktem Verbundwerkstoff sowie ein Werkzeug für ein solches Verfahren. Die Erfindung findet insbesondere Anwendung bei der Herstellung von Komponenten eines Rumpfes und/oder einer größeren Strömungsfläche eines Flugzeugs.

Im Hinblick auf die Bestrebungen, Flugzeuge zukünftig ökologisch angepasst sowie kostengünstig in der Herstellung und im Betrieb bereitzustellen und dennoch den strengsten Sicherheitsbestimmungen gerecht zu werden, wird zunehmend nach Möglichkeiten gesucht, die essentiellen Primärstrukturen (z. B. Flügel, Rumpfkomponenten, Gehäuse der Antriebsaggregate, etc.) nicht mehr aus Aluminium sondern mit faserverstärktem Verbundwerkstoff herzustellen. Mit dieser Leichtbau-Technik kann insbesondere das Gewicht der Flugzeuge deutlich reduziert werden. Bei der Herstellung solcher essentiellen Primärstrukturen ist zu berücksichtigen, dass diese beachtliche Ausmaße annehmen, so sind beispielsweise die Landeklappen Bauteile, die sich über mehrere Meter erstrecken. Diese Bauteile sind zudem hohen Belastungen im Betrieb ausgesetzt und stellen damit sicherheitskritische Bauteile dar, bei denen besondere Qualitätsanforderungen eingehalten werden müssen.

Solche faserverstärkten Verbundwerkstoffe umfassen im Allgemeinen zwei wesentliche Komponenten, nämlich einmal die Faser und andererseits eine die Faser umgebende Polymermatrix. Die Matrix umschließt die Fasern und wird durch eine thermische Behandlung gehärtet (Polymerisation), so dass eine dreidimensionale Vernetzung erfolgt. Mit dieser Polymerisation wird erreicht, dass die Fasern fest miteinander verbunden sind und so Kräfte, nämlich überwiegend über Schubspannungen, in die Fasern eingeleitet werden können. Als Faser kommen neben Kohlefaser gegebenenfalls auch Glasfasern in Betracht. Kohlefasern, die heutzutage noch vergleichsweise teuer sind, bestehen regelmäßig zu mindestens 90 Gew.-% aus Kohlenstoff. Der Faserdurchmesser beträgt beispielsweise 4,5 bis 8 µm (Mikrometer). Die Eigenschaften solcher Kohlefaser sind anisotrop. Im Gegensatz dazu besitzen Glasfasern eine amorphe Struktur und isotrope Eigenschaften. Sie bestehen überwiegend aus Siliciumoxid, wobei gegebenenfalls weitere Oxide beigemengt sein können. Während die Glasfasern relativ günstig sind, zeichnen sich die Kohlefasern durch ihre hohe Festigkeit und Steifigkeit aus.

Gerade im Flugzeugbau wird die sogenannte Prepreg-Technik angesetzt. Bei dieser Technologie werden z. B. vorimprägnierte Gewebe oder andere Faserformen (Preformling) in Kunstharze getränkt und lediglich bis zu einer leichten Verfestigung (Gelierung) thermisch behandelt, so dass sie lagenweise handhabbar sind. Ein solches Prepreg-Material haftet ein wenig und ist somit gut in entsprechende Formwerkzeugen bzw. schichtweise aufeinander anzuordnen, bis die gewünschte Bauteil-Form ausgebildet ist. Sind die gewünschten Schichten des Prepreg-Materials angeordnet, können sie (thermisch) ausgehärtet werden. Zum Aushärten dieser Prepreg-Bauteile kommen heutzutage sogenannte Autoklaven zum Einsatz, also Öfen, die gegebenenfalls mit Überdruck (bis zu 10 bar) über viele Stunden beheizt werden müssen, um eine vollständige Aushärtung der Bauteile zu erreichen.

Aus der DE 10 2005 050 528 A1 ist zudem ein Mikrowellen-Autoklav bekannt, mit dem die Herstellung von Faserverbundbauteilen mittels einer Mikrowellenstrahlung vorgeschlagen wird. Die dort vorgeschlagene Vorrichtung ermöglicht, eine Mikrowellenstrahlung in den Druckraum des Autoklaven einzukoppeln. Bei der Anregung der für dieses Verfahren geeigneten Prepreg-Materialien direkt mit Mikrowellen besteht der Vorteil, dass es nicht erforderlich ist, die im Autoklaven befindliche Luft bzw. das darin befindliche Schutzgas zu erwärmen, das aufgrund der Größe der Bauteile mit einem beachtlichen Volumen vorliegt. Durch die Verwendung der Mikrowellen-Technologie kann das auszuhärtende Prepreg-Material selbst direkt aufgewärmt werden, der restliche Umgebungsbereich bleibt demnach relativ kalt.

Ebenso ist der in der DE 103 29 411 A 1 beschriebene Mikrowellenresonator geeignet, um die thermische Behandlung durchzuführen. Dieser Mikrowellenresonator wird in der Regel ohne Überdruck betrieben. Er kann aber in einen Druckkessel (Autoklav) integriert werden.

JP-A-02006107 offenbart die Merkmale der Oberbegriffe der Ansprüche 1 und 5.

Bei der Erwärmung eines Materials mit Mikrowellen können folgende Wirkmechanismen einsetzten: eine dielektrische Erwärmung und eine Ohm'sche Erwärmung. Sind in dem Material (frei) bewegbare Dipole (also Moleküle mit einer unregelmäßigen Ladungsverteilung) vorhanden, so werden diese in einem durch die Mikrowellen erzeugten elektromagnetischen Feld zu einer hochfrequenten Schwingung angeregt. Diese kinetische Energie der Dipole wird dann durch interne Reibung in Wärme umgesetzt, die direkt im Material entsteht (dielektrische Erwärmung). Außerdem ist auch möglich, dass durch Induktion Wirbelströme entstehen, so dass der elektrische Widerstand des Materials schließlich eine Temperaturerhöhung bedingt (Ohm'sche Erwärmung). Somit kann das Material beispielsweise auf Temperaturen oberhalb von 130°C, oberhalb von 160°C oder sogar auch oberhalb von 200°C erwärmt werden. Dieses Temperaturniveau ermöglicht, dass die Polymerisation bzw. Härtung bei den Prepreg-Materialien einsetzt.

Hier stehen nun insbesondere Flugzeug-Komponenten im Vordergrund, die eine relativ große Grundfläche haben und daraus hervorstehende Erhebungen. Diese Erhebungen sind beispielsweise stegartige Rippen, die insbesondere zur Erhöhung der Steifigkeit der (montierten) Komponente beitragen sollen. Solche Erhebungen haben beispielsweise eine Länge von ca. 11 m (Meter), eine Materialstärke im Bereich von 2,5 mm bis 4 mm (Millimeter) und eine Höhe, mit der sie über die Grundfläche hinausragen, von zumindest 25 mm (Millimeter).

Bei der Herstellung solcher Komponenten durch Härten mittels MikrowellenBestrahlung ist es wichtig, dass in Materialien eine gleichmäßige und ausreichende Vernetzung gewährleistet ist. Hierfür ist es erforderlich, dass diese "verwinkelte" Gestalt der Komponente entsprechend mit Mikrostrahlung behandelt werden kann und/oder dass eine homogene Temperaturverteilung am Bauteil erreicht wird. Zudem ist zu berücksichtigen, dass die hier eingesetzten Prepreg-Materialien regelmäßig selbst nicht formsteif sind, also mit entsprechenden Halte- und/oder Formwerkzeugen in der gewünschten Lage während der Mikrowellenbestrahlung fixiert werden müssen. Dadurch wird das zuvor angesprochene Problem weiter vergrößert.

Hiervon ausgehend ist es Aufgabe der vorliegenden Erfindung, die mit Bezug auf den Stand der Technik geschilderten Probleme wenigstens teilweise zu lösen. Insbesondere soll ein Verfahren angegeben werden, mit dem die vorstehend beschriebenen Bauteile einfach und prozesssicher mit einem gewünscht hohen, gleichmäßigen Vernetzungsgrad des faserverstärkten Verbundwerkstoffs erzeugt werden können. Außerdem soll ein Formwerkzeug angegeben werden, das insbesondere den gleichmäßigen Härteprozess im Rahmen der Mikrowellen-Behandlung gewährleistet.

Diese Aufgaben werden gelöst mit einem Verfahren gemäß den Merkmalen des Patentanspruchs 1 sowie einem Formwerkzeug gemäß den Merkmalen des Patentanspruchs 5. Weitere bevorzugte Ausführungsvarianten und Einsatzgebiete der Erfindung werden in den jeweils abhängig formulierten Patentansprüchen angegeben. Es ist darauf hinzuweisen, dass die in den Patentansprüchen einzeln aufgeführten Merkmale, in beliebiger, technologisch sinnvoller, Weise miteinander kombiniert werden können und weitere Ausgestaltungen der Erfindung aufzeigen. Die Beschreibung, gerade im Zusammenhang mit den Figuren, führt weitere besonders bevorzugte Ausführungsbeispiele der Erfindung an.

Das erfindungsgemäße Verfahren zur Herstellung eines Bauteiles weist mindestens eine Schicht mit faserverstärktem Verbundwerkstoff umfassend zumindest die folgenden Schritte auf:
a) Anordnen der mindestens einen Schicht aus polymerisierbaren faserverstärktem Verbundwerkstoff mit einer Gestalt, wobei die Gestalt eine Grundfläche und eine Mehrzahl von Erhebungen aufweist;
b) Positionieren wenigstens eines Formwerkzeuges mit Kontakt zumindest zu einer Erhebung, wobei das Formwerkzeug zumindest in einer Kontaktfläche hin zu der zumindest einen Erhebung mit einem mikrowellensensiblen Material ausgeführt ist;
c) Polymerisieren der zumindest einen Erhebung durch Bestrahlen des wenigstens einen Formwerkzeuges mit Mikrowellen, wobei das Formwerkzeug wenigstens einen Bereich außerhalb der Kontaktfläche hat, der mit mikrowellentransparentem Material ausgeführt ist.

Die faserverstärkten Verbundwerkstoffe, die hier eingesetzt werden, sind polymerisationsfähig. Auch wenn es hier vorrangig nicht erforderlich ist, können auch die faserverstärkten Verbundwerkstoffe Mikrowellen absorbieren. Damit ist insbesondere gemeint, dass der eingesetzte faserverstärkten Verbundwerkstoff erwärmt werden kann und somit eine (teilweise) Härtung (bzw. Polymerisation) des Verbundwerkstoffes, wie auch in der Einleitung beschrieben, erfolgen kann.

Bei dem faserverstärkten Verbundwerkstoff handelt es sich insbesondere um einen kohlenfaserverstärkten Verbundwerkstoff. Die Kohlefasern sind bevorzugt als im Ausgangszustand endlose Langfasern ausgeführt, die in den Bauteilen schichtweise, mit unterschiedlicher Ausrichtung der Faserlängsrichtung angeordnet sind. Als Harz kommt insbesondere eines der folgenden in Betracht: Epoxidharz, Phenolharz, Bismaleimidharz oder Polyesterharz. Außerdem können auch glasfaserverstärkte Verbundwerkstoffe mit den bekannten Harzmatrixwerkstoffen eingesetzt werden.

Zur Herstellung des Bauteils kann nur eine Schicht aus polymerisierbarem faserverstärktem Verbundwerkstoff zum Einsatz gelangen, es ist aber auch möglich, wenigstens bereichsweise mehrere solcher Schichten aufeinander zu positionieren, um gegebenenfalls variable Dicken des Bauteils generieren zu können. Auch können die unterschiedlichen Schichten dazu verwendet werden, eine komplexere Gestalt, wie hier mit Grundfläche und Erhebungen, darzustellen. Eine "Schicht" stellt dabei insbesondere eine Lage eines Prepreg-Materials dar.

Im Rahmen des Schrittes a) werden beispielsweise mehrere Schichten aufeinander und/oder nebeneinander auf einer Auflage positioniert, so dass diese die Grundfläche bilden. Die Grundfläche kann dabei eine Größe von mehreren Quadratmetern aufweisen und eine (leicht) gebogene Form darstellen. Bevorzugt einseitig, nämlich gegenüberliegend zu der Auflage, werden nun Schichten so angeordnet, dass eine Mehrzahl von Erhebungen gebildet wird. Die Erhebungen sind bevorzugt nach Art von Rippen länglich ausgebildet. Bevorzugt sind mindestens drei, besonders bevorzugt mindestens fünf oder sogar mindestens zehn solcher Erhebungen auf dieser Grundfläche mit den Schichten zu bilden. Auf diese Weise wird nun insbesondere die gewünschte Gestalt einer Komponente einer Landeklappe oder einer anderen Strömungsfläche eines Flugzeuges aufgebaut.

Gemäß Schritt b) wird weiter wenigstens ein Formwerkzeug mit Kontakt zumindest zu einer Erhebung positioniert. Dabei liegt das Formwerkzeug mit seiner Kontaktfläche direkt oder mittelbar (gegebenenfalls über übliche Folien etc.) an wenigstens einer der Erhebung (einseitig und/oder zweiseitig) an. Das Formwerkzeug ist nun zumindest in dem Bereich umfassend die Kontaktfläche mit einem mikrowellensensiblen Material ausgeführt. Das heißt insbesondere, dass sich dieses Material erwärmt, wenn es mit Mikrowellen behandelt bzw. bestrahlt wird, wobei insbesondere die Effekte der dielektrischen Erwärmung und/oder Ohm'schen Erwärmung auftreten. Auf diese Weise wird nun also das Formwerkzeug (ggf. partiell) durch die Mikrowellenbestrahlung erwärmt, wobei diese Wärme nun an die Schichten aus polymerisierbaren faserverstärkten Verbundwerkstoff übergeleitet werden. Hierbei kommt bevorzugt ein Material zum Einsatz, welches selbst nicht polymerisierbar ist, also zumindest über eine Vielzahl solcher Mikrowellen-Behandlungen in seinen Eigenschaften hinsichtlich Formstabilität, Porosität, Wärmeerzeugungsvermögen etc. beibehält. Hierfür können beispielsweise folgende Materialien (einzeln oder teilweise in Kombination miteinander) zum Einsatz gelangen: mit diversen Additiven in unterschiedlichen Beimengungsverhältnissen gefüllte, mikrowellentransparente Werkstoffe wie z. B. Silikon, PTFE, PP, EP, PET, Glaskeramik, Aluminiumoxid, Quarzglas oder dergleichen. Additive können sein: (gemahlene) Kohlekurzfaser (z. B. Länge 0,1 bis 0,25 mm), Ruß, Aktivkohle, Nanostrukturen, wie z. B. CNT (Carbon Nano Tubes), Silikate, Sol-Gel-Materialien, etc. Weitere Materialien sind (ggf. wiederum gefüllte) Kautschuke sowie Faserverbundwerkstoffe mit zumindest einem Polymer- oder Thermoplastmatrixwerkstoff.

Nachdem nun ein solches Formwerkzeug entsprechend auf der Grundfläche und mit Kontakt hin zu wenigstens einer Erhebung positioniert ist, kann Schritt c) eingeleitet werden. Dabei wird die gesamte Anordnung aus den polymerisierbaren faserverstärkten Verbundwerkstoff-Schichten und dem Formwerkzeug mit Mikrowellen behandelt, so dass diese alle einem hochfrequenten elektromagnetischen Feld ausgesetzt sind. Da das Formwerkzeug nun zumindest teilweise eine direkte Einwirkung der Mikrowellen auf die Schichten aus polymerisierbarem verstärktem Verbundwerkstoff verhindert, erfolgt also keine direkte Behandlung der Schicht mit Mikrowellen sondern (nur) des Formwerkzeuges. Die Polymerisation in den Schichten bzw. insbesondere in der kontaktierten Erhebung und im Übergangsbereich zwischen der Erhebung und der Grundfläche wird nun gleichmäßig über die Anlage des Formwerkzeuges bewirkt, das sich in Folge der Mikrowellenbestrahlung erwärmt. So kann auch an diesen komplizierten Schichtübergängen eine gleichmäßige und ausreichende Temperatureinbringung in die Schichten erreicht werden, so dass eine gleichmäßige Vernetzung mit einem ausreichenden Vernetzungsgrad sichergestellt ist. Somit dient das Formwerkzeug nicht nur als Heizaggregat sondern gleichzeitig auch als Wärmeverteilungsstruktur.

Gemäß einer Weiterbildung des Verfahrens wird vorgeschlagen, dass in Schritt b) das wenigstens eine Formwerkzeug mit Kontakt zu zwei benachbarten Erhebungen positioniert wird. Bevorzugt ist in diesem Zusammenhang auch, dass das Formwerkzeug beispielsweise nach Art eines U-Profils ausgeführt ist und folglich zwischen zwei benachbarten Erhebungen (und auf der Grundfläche aufliegend) positioniert ist. Ganz besonders bevorzugt ist, dass zwischen allen benachbarten Erhebungen des Bauteils solche Formwerkzeuge angeordnet sind. Damit wird praktisch die gesamte Oberfläche der Grundfläche mit den Erhebungen durch die Formwerkzeuge überdeckt. Die Formwerkzeuge, die selbst formsteif und mit einer dreidimensionalen Form ausgebildet sind, dienen folglich auch als Halte- oder Stützelemente für die Erhebungen. Damit können besonders hohe Formtoleranzen bezüglich der Lage der Erhebungen zueinander und/oder der Erhebungen gegenüber der Grundfläche erreicht werden. Außerdem ist so auch eine über das Bauteil gleichmäßige Wärmeeinbringung trotz der relativ komplexen Gestalt des Bauteils möglich.

Es wird auch als vorteilhaft angesehen, dass in Schritt b) die Mehrzahl der Erhebungen mittels einer Mehrzahl miteinander zusammenwirkender Formwerkzeuge fixiert wird. Damit ist insbesondere gemeint, dass die Formwerkzeuge direkt oder über die Erhebungen selbst miteinander zusammenwirken. So können die Formwerkzeuge und/oder die Erhebungen gegebenenfalls auch gegeneinander verspannt werden, wodurch die Fixierung der Schichten vor und während der Polymerisation sicher fixiert ist. Damit wird insbesondere auch die Handhabung bzw. der Transport der zum Härten vorbereiteten Schichten vereinfacht.

Einer Weiterbildung des Verfahrens zur Folge wird als Schritt d) das wenigstens ein Formwerkzeug entfernt. Grundsätzlich wird Schritt d) durchgeführt, wenn Schritt c) vollständig abgeschlossen ist, also der gewünschte Vernetzungsgrad im Bauteil zumindest überwiegend erreicht ist. In besonderen Anwendungsfällen kann es aber auch möglich sein, dass zumindest ein Teil der Formwerkzeuge bereits dann entfernt wird, wenn die Polymerisation noch nicht vollständig abgeschlossen ist. Dies betrifft insbesondere den Fall, wenn die Schichten aus polymerisierbarem faserverstärktem Verbundwerkstoff selbst mikrowellensensibel sind.

Einem weiteren Aspekt der Erfindung nach wird auch ein Formwerkzeug zur Herstellung eines Bauteils aufweisend mindestens eine Schicht mit faserverstärktem Verbundwerkstoff vorgeschlagen, wobei das Formwerkzeug mit einer dreidimensionalen Form ausgeführt ist und das Formwerkzeug weiter eine Kontaktfläche für das Bauteil hat und zumindest die Kontaktfläche mit mikrowellensensiblem Material und wenigstens ein Bereich außerhalb der Kontaktfläche mit mikrowellentransparentem Material gebildet ist.

Dieses Formwerkzeug wird insbesondere zur Durchführung des hier erfindungsgemäß beschriebenen Verfahrens eingesetzt.

Das Formwerkzeug ist dabei vorteilhafter Weise so gebildet, dass beispielsweise eine formsteife Tragstruktur vorgesehen ist, die das mikrowellensensible Material aufnimmt. Gleichwohl ist aber auch möglich, dass das mikrowellensensible Material selbst formsteif ist und daher (zumindest teilweise) eigenständig die dreidimensionale Form des Werkzeugs bildet. Mit einer dreidimensionalen Form soll insbesondere zum Ausdruck gebracht werden, dass es sich hierbei nicht um instabile Folien oder dergleichen handelt, sondern insbesondere, dass diese im Querschnitt z. B. nach Art eines L, U oder dergleichen gebildet sind und diese Form auch bei erhöhtem Umgebungsdruck, beispielsweise bis 10 bar, nicht verlieren. Im Regelfall wird das Formwerkzeug mit einer Kontaktfläche in dem Bereich gebildet sein, der eine äußere Oberfläche des Formwerkzeugs umfasst. Bevorzugt ist auch, dass die Kontaktfläche nur auf einer äußeren Oberfläche, nämlich der später hin zum Bauteil ausgerichteten, mit dem mikrowellensensiblen Material gebildet ist. Das mikrowellensensible Material ist also wärmetechnisch mit dieser Kontaktfläche verbunden, um hier eine Wärmeeinleitung in das Bauteil zu ermöglichen.

Üblicher Weise wird das Formwerkzeug auf der, der Kontaktfläche gegenüberliegenden äußeren Oberfläche mit Mikrowellen behandelt. Um nun eine möglichst vollständige und gezielte Erzeugung von Wärme in dem Formwerkzeug nahe der Kontaktfläche zu erreichen und gleichzeitig die hohen Anforderungen hinsichtlich der Formsteifigkeit des Formwerkzeugs zu verwirklichen, kann es sinnvoll sein, die beiden Funktionen auch in Bezug auf das Material voneinander zu trennen. Hier wird also die Formstabilität beispielsweise durch ein mikrowellentransparentes Material bereitgestellt, das also die Mikrowellen "durchlässt", und so gleichwohl ein nahezu vollständiger Energieeintrag in das mikrowellensensible Material ermöglicht ist. Beispiele für solche mikrowellentransparenten Materialien sind Silikon, PTFE, PP, EP, PET, Glaskeramik, Aluminiumoxid, Quarzglas oder dergleichen.

Zudem wird vorgeschlagen, dass das Formwerkzeug eine Kontaktfläche für das Bauteil und eine, der Kontaktfläche gegenüberliegende Außenfläche hat und nahe der Außenfläche Mittel zur thermischen Isolation vorgesehen sind. Dabei wird insbesondere auch davon ausgegangen, dass die Mittel zur thermischen Isolation mikrowellentransparentes Material umfassen. Mit der thermischen Isolation wird bewirkt, dass die im mikrowellensensiblen Material erzeugte Wärme vorrangig nur hin zum Bauteil und nicht an die Umgebung abgegeben wird. Auf diese Weise kann der Wirkungsgrad weiter erhöht werden. Zur thermischen Isolation kann beispielsweise Glaswolle bzw. eine ähnliche Mineralwolle eingesetzt werden.

Gemäß einer Weiterbildung des Formwerkzeugs ist dieses mit wenigstens einem Hohlraum ausgeführt. Der Hohlraum kann beispielsweise für Umgebungsluft durchströmbar und/oder befüllbar ausgeführt sein. Dieser Hohlraum kann somit insbesondere auch zur thermischen Isolation verwendet werden. Gegebenenfalls ist auch möglich, dass eine Vielzahl solcher Hohlräume vorgesehen ist, wobei der Hohlraum dann auch als Reservoir für verschiedene Materialien (mikrowellentransparent und/oder mikrowellensensibel) genutzt werden kann.

Darüber hinaus wird auch vorgeschlagen, dass das Formwerkzeug zumindest teilweise mit einem aktiven Kühlsystem verbindbar ist. Das aktive Kühlsystem, ähnlich wie die thermische Isolation, auf der, der Kontaktfläche abgewandten Seite des Formwerkzeugs anzuordnen, wodurch weiterhin gezielt und gegebenenfalls nur bereichsweise die Wärmeabfuhr hin zur Umgebung unterbunden werden kann. Ein solches "aktives" Kühlsystem betrifft insbesondere regelbare Kühlsysteme, wobei Kühlmedien das Formwerkzeug durchströmen. Kühlmedien sind insbesondere kalte Umgebungsluft, ein kaltes Gas und/oder eine kalte Flüssigkeit mit einer Temperatur unterhalb von 40 °C oder sogar unterhalb von 0 °C.

Zudem wird auch als vorteilhaft angesehen, dass das Formwerkzeug mit zumindest einer exponierten Mikrowellen-Einleitstruktur ausgeführt ist, die mit der Kontaktfläche aus mikrowellensensiblem Material zusammenwirkt. Hiermit ist insbesondere gemeint, dass in von der Kontaktfläche entfernten Bereichen mikrowellensensibles Material angeordnet ist, das in Wärme leitendem Kontakt zur Kontaktfläche ausgeführt ist. Somit kann insbesondere auch eine "interne" Wärmeleitung von für die Mikrowellenstrahlen besonders gut erreichbaren Positionen am Formwerkzeug hin zur Kontaktfläche erreicht werden.

Ganz besonders bevorzugt dient das hier vorgestellte Verfahren bzw. das hier vorgestellte Formwerkzeug zur Herstellung einer Komponente eines Rumpfes und/oder einer äußeren Strömungsfläche eines Flugzeuges, das ein solches Bauteil umfasst. Die Komponente betrifft insbesondere eine aus der folgenden Gruppe: Landeklappen, Flap track beam, Nasenteile, Seitenleitwerk, Höhenleitwerk, Spoiler, Dachelemente, Düsengehäuse, Ausleger, Strukturrahmen. Die Erfindung kann gleichermaßen für Bauteile anderer Fluggeräte eingesetzt werden, wie z. B. bei Hubschraubern.

Die Erfindung sowie das technische Umfeld nachfolgend anhand der Figuren weiter erläutert. Es ist darauf hinzuweisen, dass die Figuren besonders bevorzugte Ausführungsvarianten der Erfindung zeigen, diese aber nicht darauf beschränkt ist. Es zeigen schematisch:
- Figur 1:: eine Vorrichtung zur Durchführung des Verfahrens,
- Figur 2:: eine erste Ausführungsvariante eines Formwerkzeuges,
- Figur 3:: eine zweite Ausführungsvariante des Formwerkzeugs, und
- Figur 4:: ein Flugzeug.

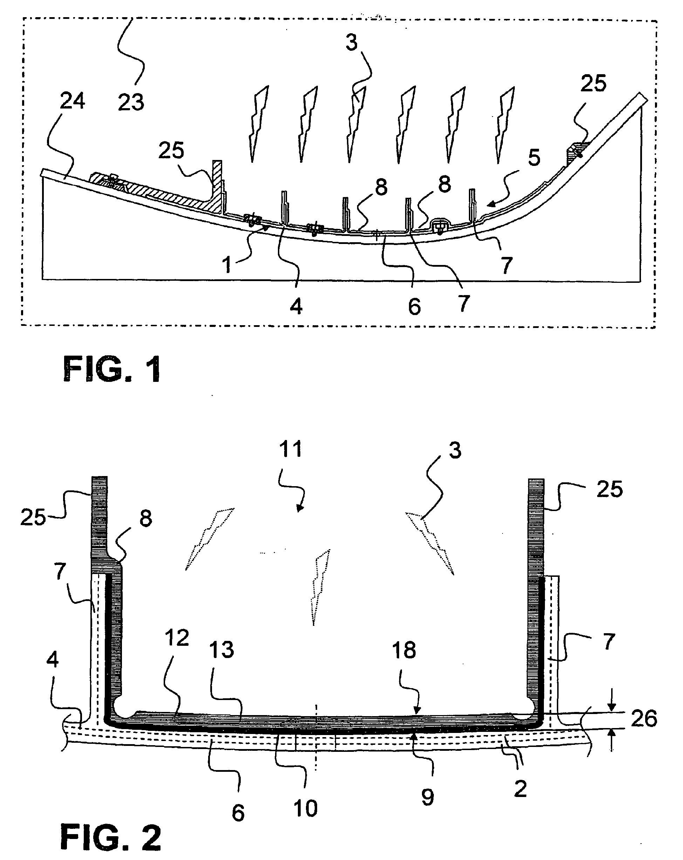

In der Figur 1 ist eine Vorrichtung 23 zur Durchführung des hier erfindungsgemäß beschriebenen Verfahrens veranschaulicht. Bei der Vorrichtung kann es sich beispielsweise um einen Mikrowellenautoklaven handeln, wie er in der Einleitung beschrieben ist. Darin ist nun eine Auflage 24 vorgesehen, auf der das zu härtende Bauteil 1, hier ein Teil einer Landeklappe, im Schnitt dargestellt ist. Das Bauteil 1 ist zwischen zwei Abstützflächen 25 auf der Auflage 24 fixiert und weist eine im Wesentlichen gekrümmte Grundfläche 6 und eine Mehrzahl nach oben gerichteter, rippenartiger Erhebungen 7 auf.

Zur ortsnahen Erzeugung einer Wärmequelle und zur Gewährleistung einer exakten Ausrichtung der Erhebungen 7 zueinander, sind hier eine Mehrzahl von Formwerkzeugen 8 auf der, der Auflage 24 abgewandten Seite des Bauteils 1 positioniert. Die Formwerkzeuge 8 wirken dabei miteinander zusammen. So sind diese insbesondere miteinander und zwischen den beiden Abstützflächen 25 verspannt. Die Formwerkzeuge 8 überdecken so die gesamte freie Außenfläche des Bauteils 1 aus polymerisierbarem faserverstärktem Verbundwerkstoff 4.

Um nun eine gleichmäßige Polymerisierung trotz dieser relativ komplexen Gestalt 5 des Bauteils zu gewährleisten, weisen die Formwerkzeuge mikrowellensensibles Material auf, das sich in Folge der Bestrahlung mit Mikrowellen 3 innerhalb der Vorrichtung 23 ortsnah an dem Bauteil 1 erwärmt. So können insbesondere am Bauteil Temperaturen erreicht werden, die zumindest 130 °C oder sogar 180 °C sicher erreichen.

Ein Detail einer Ausführungsvariante des Formwerkzeugs 8 ist in Figur 2 dargestellt. Unten ist zunächst teilweise das Bauteil dargestellt, das mit mehreren Schichten 2 aus polymerisierbarem faserverstärktem Verbundwerkstoff gebildet ist (mehrere Lagen eines Prepreg-Materials). Dabei liegt eine Gestalt 5 vor, wobei zwei im Wesentlichen senkrecht zur Grundfläche 6 sich erstreckende Erhebungen 7 vorgesehen sind.

Zwischen diese beiden Erhebungen 7 ist nun ein hier im Wesentlichen U-förmig ausgebildetes Formwerkzeug 8 positioniert. Dieses überdeckt vollständig die äußere Oberfläche des Bauteils zwischen diesen beiden benachbarten Erhebungen 7 und bildet demnach zu beiden Erhebungen 7 und der dazwischen liegenden Grundfläche 6 eine Kontaktfläche 9 aus. Genau diese Kontaktfläche 9 des Formwerkzeugs 8 ist nun mit dem mikrowellensensiblen Material 10 gebildet. Das mikrowellensensible Material 10 erstreckt sich dabei nicht über die gesamte Dicke 26 des Formwerkzeuges 8, sondern nur in dem äußeren Bereich 12 hin zur Außenfläche 18 ist mikrowellentransparentes Material 13 vorgesehen, welches beispielsweise die dreidimensionale, U-ähnliche Form 11 auch bei wiederholtem Einsatz des Formwerkzeugs 8 gewährleistet. Folglich durchdringen die Mikrowellen 3 zunächst den Bereich 12 mit mikrowellentransparentem Material 13 und erzeugen dann eine dielektrische Erwärmung des mikrowellensensiblen Materials 10 im Bereich der Kontaktfläche 9.

In Figur 2 ist auch zu erkennen, dass die seitlichen Wandabschnitte der U-ähnlichen Form 11 des Formwerkzeugs 8 die Erhebungen 7 überragen. Diese überragenden Wandabschnitte dienen insbesondere ebenfalls als Abstützfläche 25 für benachbarte Formwerkzeuge 8, so dass die Formwerkzeuge 8 gegeneinander ausgerichtet bzw. verspannt sind und so die Lage der Erhebungen exakt eingehalten werden kann.

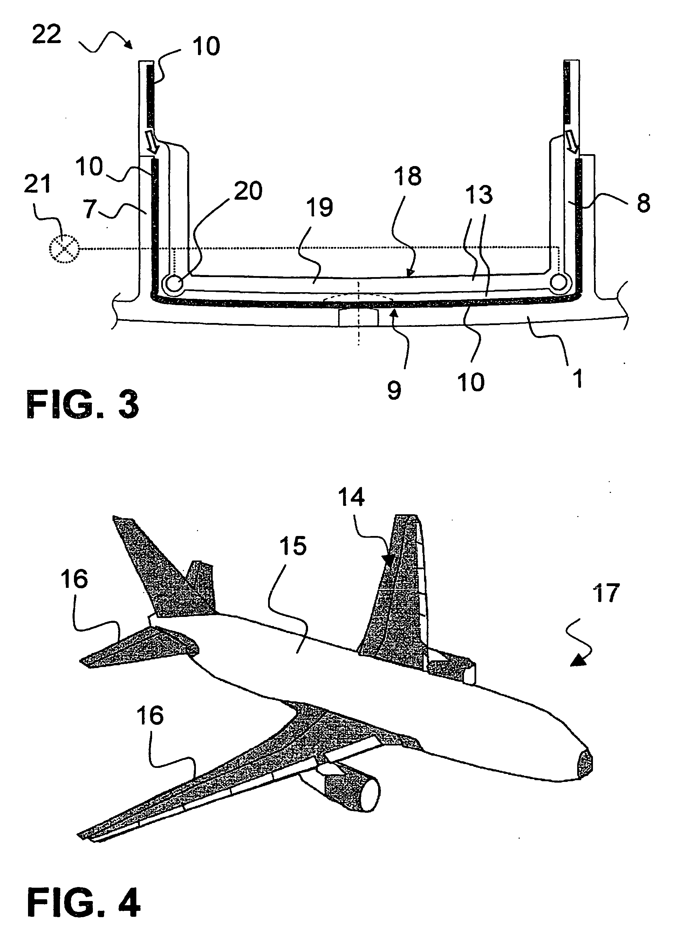

Figur 3 zeigt eine weitere Ausführungsvariante eines Formwerkzeugs 8. Hierbei ist das Formwerkzeug 8 nicht nur im Bereich der Kontaktfläche 9 sondern auch in den über die Erhebungen 7 hinausragenden Wandabschnitten mit mikrowellensensiblem Material 10 ausgeführt. Dieser Abschnitt dient beispielsweise als exponierte Mikrowellen-Einleitstruktur, von der aus ein Wärmefluss (hier mit einem Pfeil angedeutet) hin zur Kontaktfläche 9 erzeugt werden kann. So wird insbesondere auch verhindert, dass in Randbereichen der Kontaktfläche 9 unerwünschte Kaltstellen ausgebildet werden.

Darüber hinaus ist das Formwerkzeug 8 hier mit mehreren Bereichen aus mikrowellentransparentem Material 13 gebildet, wobei hier im Bereich der Außenfläche 18 eine thermische Isolierung 19 (z. B. aus Glaswolle) vorgesehen ist. In den Eckbereichen sind zusätzlich Hohlräume 20 gebildet, die beispielsweise an ein aktives Kühlsystem 21 ankoppelbar sind. So ist es beispielsweise möglich, durch die Hohlräume 20 kühle Umgebungsluft hindurch zu leiten.

Figur 4 veranschaulicht nun noch die Komponenten 14 des Rumpfes oder einer Strömungsfläche 16 eines Flugzeuges 17, die mit Bauteilen nach dem hier erfindungsgemäß beschriebenen Verfahren hergestellt werden können. Es ist zu erkennen, dass bereits großflächige, primäre Strukturbauteile eines Flugzeuges 17 mit dem vorgeschlagenen Verfahren hergestellt werden können, wobei gleichermaßen das Gewicht des Flugzeuges 17 deutlich reduziert werden kann. Der mit einhergehende geringere Treibstoffverbrauch und/oder die höhere Zuladung sind wesentliche Vorteile dieser Erfindung.

### Bezugszeichenliste

- 1: Bauteil
- 2: erste Schicht
- 3: Mikrowellen
- 4: Verbundwerkstoff
- 5: Gestalt
- 6: Grundfläche
- 7: Erhebung
- 8: Formwerkzeug
- 9: Kontaktfläche
- 10: mikrowellensensibles Material
- 11: Form
- 12: Bereich
- 13: mikrowellentransparentes Material
- 14: Komponente
- 15: Rumpf
- 16: Strömungsfläche
- 17: Flugzeug
- 18: Außenfläche
- 19: thermische Isolation
- 20: Hohlraum
- 21: Kühlsystem
- 22: Mikrowellen-Einleitstruktur
- 23: Vorrichtung
- 24: Auflage
- 25: Abstützfläche
- 26: Dicke

## Patentansprüche

1. Verfahren zur Herstellung eines Bauteiles (1) aufweisend mindestens eine Schicht (2) mit faserverstärktem Verbundwerkstoff (4) umfassend zumindest die folgenden Schritte:
a) Anordnen der mindestens einen Schicht (2) aus polymerisierbaren faserverstärktem Verbundwerkstoff (4) mit einer Gestalt (5), wobei die Gestalt (5) eine Grundfläche (6) und eine Mehrzahl von Erhebungen (7) aufweist;
b) Positionieren wenigstens eines Formwerkzeuges (8) mit Kontakt zumindest zu einer Erhebung (7), wobei das Formwerkzeug (8) zumindest in einer Kontaktfläche (9) hin zu der zumindest einen Erhebung (8) mit einem mikrowellensensiblen Material (10) ausgeführt ist;
c) Polymerisieren der zumindest einen Erhebung (7) durch Bestrahlen des wenigstens einen Formwerkzeuges (8) mit Mikrowellen (3),
**dadurch gekennzeichnet, dass**
das Formwerkzeug (8) wenigstens einen Bereich außerhalb der Kontaktfläche (9) hat, der mit mikrowellentransparentem Material (13) ausgeführt ist.

2. Verfahren nach Patentanspruch 1, bei dem in Schritt b) das wenigstens eine Formwerkzeug (8) mit Kontakt zu zwei benachbarten Erhebungen (7) positioniert wird.

3. Verfahren nach Patentanspruch 1 oder 2, bei dem in Schritt b) die Mehrzahl der Erhebungen (7) mittels einer Mehrzahl miteinander zusammenwirkender Formwerkzeuge (8) fixiert wird.

4. Verfahren nach einem der vorhergehenden Patentansprüche, bei dem als Schritt d) das wenigstens eine Formwerkzeug (8) entfernt wird.

5. Formwerkzeug (8) zur Herstellung eines Bauteiles (1) aufweisend mindestens eine Schicht (2) mit faserverstärktem Verbundwerkstoff (4), mit einer dreidimensionalen Form (11), wobei das Formwerkzeug (8) eine Kontaktfläche (9) für das Bauteil (1) hat und zumindest die Kontaktfläche (9) mit mikrowellensensiblen Material (10) gebildet ist, **dadurch gekennzeichnet, dass** das Formwerkzeug (8) wenigstens einen Bereich (12) außerhalb der Kontaktfläche (9) hat, der mit mikrowellentransparentem Material (13) gebildet ist.

6. Formwerkzeug (8) nach Patentanspruch 5, wobei das Formwerkzeug (8) eine Kontaktfläche (9) für das Bauteil (1) und eine, der Kontaktfläche (9) gegenüberliegende, Außenfläche (18) hat und nahe der Außenfläche (18) Mittel zur thermischen Isolation (19) vorgesehen sind.

7. Formwerkzeug (8) nach einem der Patentansprüche 5 oder 6, wobei das Formwerkzeug (8) wenigstens einen Hohlraum (20) hat.

8. Formwerkzeug (8) nach einem der Patentansprüche 5 bis 7, wobei das Formwerkzeug (8) zumindest teilweise mit einem aktiven Kühlsystem (21) verbindbar ist.

9. Formwerkzeug (8) nach einem der Patentansprüche 5 bis 8, wobei das Formwerkzeug (8) mit zumindest einer exponierten Mikrowellen-Einleitstruktur (22) ausgeführt ist, die mit der Kontaktfläche (9) aus mikrowellensensiblen Material (10) zusammenwirkt.

## Claims

1. A method for producing a structural part (1) having at least one layer (2) comprising fiber-reinforced composite material (4), said method comprising at least the following steps:
a) Arranging the at least one layer (2) made of polymerizable fiber-reinforced composite material (4) in a shape (5), wherein the shape (5) has a base surface (6) and a plurality of elevations (7);
b) Positioning at least one molding tool (8) so as to be in contact with at least one elevation (7), wherein the molding tool (8) is formed with a microwave-sensitive material (10) at least in a contact surface (9) toward the at least one elevation (8);
c) Polymerizing the at least one elevation (7) by irradiating the at least one molding tool (8) with microwaves (3)
**characterized in that** the molding tool (8) has at least a region (12) outside the contact surface (9) which is formed with microwave-transparent material (13).

2. The method as claimed in claim 1, in which, in step b), the at least one molding tool (8) is positioned so as to be in contact with two adjacent elevations (7).

3. The method as claimed in claim 1 or 2, in which, in step b), the plurality of elevations (7) are fixed by means of a plurality of interacting molding tools (8).

4. The method as claimed in one of the preceding claims, in which, as step d), the at least one molding tool (8) is removed.

5. A molding tool (8) for producing a structural part (1) having at least one layer (2) comprising fiber-reinforced composite material (4), having a three-dimensional mold (11), wherein the molding tool (8) has a contact surface (9) for the structural part (1) and at least the contact surface (9) being formed with microwave-sensitive material (10), **characterized in that** the molding tool (8) has at least a region (12) outside the contact surface (9) which is formed with microwave-transparent material (13).

6. The molding tool (8) as claimed in claim 5, wherein the molding tool (8) has a contact surface (9) for the structural part (1) and an outer surface (18) situated opposite the contact surface (9), and means for thermal insulation (19) are provided close to the outer surface (18).

7. The molding tool (8) as claimed in one of claims 5 or 6, wherein the molding tool (8) has at least one cavity (20).

8. The molding tool (8) as claimed in one of claims 5 to 7, wherein the molding tool (8) can be connected at least partially to an active cooling system (21).

9. The molding tool (8) as claimed in one of claims 5 to 8, wherein the molding tool (8) is formed with at least one exposed microwave introduction structure (22), which interacts with the contact surface (9) made of microwave-sensitive material (10).

## Revendications

1. Procédé destiné à la fabrication d'une pièce de construction (1) ayant au moins une couche (2) avec du matériau composite renforcé par des fibres (4), le procédé comprenant au moins les étapes suivantes :
a) agencement de l'au moins une couche (2) de matériau composite polymérisable renforcé par des fibres (4) avec une forme (5), la forme (5) ayant une surface de base (6) et une pluralité d'élévations (7) ;
b) positionnement d'au moins un outil de formage (8) ayant le contact avec au moins une élévation (7), l'outil de formage (8) étant réalisé au moins dans une surface de contact (9) vers l'au moins une élévation (7) avec un matériau sensible aux microondes (10) ;
c) polymérisation de l'au moins une élévation (7) par l'irradiation avec des microondes (3) de l'au moins un outil de formage (8),
**caractérisé en ce que** l'outil de formage a au moins une région à l'extérieur de la surface de contact (9), qui est formée de matériau transparent aux microondes (13).

2. Procédé selon la revendication 1, dans le cas duquel dans l'étape b) l'au moins un outil de formage (8) est positionné en contact avec deux élévations adjacentes (7).

3. Procédé selon les revendications 1 ou 2, dans le cas duquel dans l'étape b) la pluralité des élévations (7) est fixée au moyen d'une pluralité d'outils de formage (8) coopérant entre eux.

4. Procédé selon l'une des revendications précédentes, dans le cas duquel comme étape d) l'au moins un outil de formage (8) est retiré.

5. Outil de formage (8) destiné à la fabrication d'une pièce de construction (1) comportant au moins une couche (2) avec du matériau composite renforcé par des fibres (4), avec une forme à trois dimensions (11), l'outil de formage (8) ayant une surface de contact (9) pour la pièce de construction (1) et au moins la surface de contact (9) étant formée avec du matériau sensible aux microondes (10), **caractérisé en ce que** l'outil de formage (8) a au moins une région (12) à l'extérieur de la surface de contact (9) qui est formée avec du matériau transparent aux microondes (13).

6. Outil de formage (8) selon la revendication 5, lequel outil de formage (8) a une surface de contact (9) pour la pièce de construction (1) et une surface extérieure (18) opposée à la surface de contact (9) et des moyens pour l'isolation thermique (19) étant prévus à proximité de la surface extérieure (18).

7. Outil de formage (8) selon l'une des revendications 5 ou 6, l'outil de formage (8) ayant au moins une cavité (20).

8. Outil de formage (8) selon l'une des revendications 5 à 7, l'outil de formage (8) pouvant au moins être connecté partiellement avec un système de refroidissement actif (21).

9. Outil de formage (8) selon l'une des revendications 5 à 8, l'outil de formage (8) étant réalisé avec au moins une structure d'introduction de microondes exposée (22) qui coopère avec la surface de contact (9) réalisée de matériau sensible aux microondes (10).
